# EUROPEAN PATENT SPECIFICATION

(11) **EP 4 607 907 B1**
(45) Date of publication and mention of the grant of the patent: **11.03.2026**
(21) Application number: 25156453.0
(22) Date of filing: 07.02.2025
(51) Int. Cl.: H04N 1/04, H04N 1/10

(54) **IMAGE READING DEVICE AND IMAGE FORMING APPARATUS**
BILDLESEVORRICHTUNG UND BILDERZEUGUNGSVORRICHTUNG
DISPOSITIF DE LECTURE D'IMAGE ET APPAREIL DE FORMATION D'IMAGE

(30) Priority: 20.02.2024 JP 2024023511
(43) Date of publication of application: 27.08.2025
(73) Proprietor: KYOCERA Document Solutions Inc., Osaka-shi, Osaka, 540-8585 (JP)
(72) Inventor: NGUYEN, Anh The, Osaka-shi, Osaka, 540-8585 (JP)
(74) Representative: Kurig, Thomas

(56) References cited:
- JP-A- 2012 222 764
- JP-A- 2013 223 024
- JP-A- 2023 119 166
- US-A1- 2015 264 216

## Description

### BACKGROUND

The present disclosure relates to an image reading device which reads an image of a document placed on a document table and an image forming apparatus provided with the image reading device.

The image reading device may be configured to read the image of the document by two kinds of document reading systems, a sheet-through system and a sheet fixing system. In the sheet-through system, the document is automatically conveyed to a reading position on a document table by a document conveying device, and the image of the document is read by a reading sensor at the reading position. In the sheet fixing system, the document is placed on the document table, and the image of the placed document is read by moving the reading sensor.

In order to position the document in the sheet fixing system, as shown in JP2003078720, the image reading device is provided with an abutting reference plate for regulating a reading start position of the document. The user places the document on the document table, and positions the document by abutting the reading start side edge of the document against the reference plate. Thereafter, the reading sensor is moved to read the image of the placed document.

In the image reading device described above, since the reference plate is immovable, a size of the document to be placed is restricted. As an example, the maximum size is a size of the A4 size document (210 mm × 297 mm) which is longitudinally placed (the longitudinal direction of the document is along the sub-scanning direction). In this case, for example, there is a problem that it is impossible to read a document having a legal size (215.9 mm × 355.6 mm) in the sheet fixing system.

Patent document JP2013223024A discloses an image scanner for use in e.g. multi-color or monochromatic image forming apparatus, comprising a conveyance original document read area arranged on top part of original document mounting base in original document conveyance reading mode.

### SUMMARY

An image reading device according to the present disclosure includes a document table, an image reading unit, a reading unit moving part, a cursor, and a cursor moving part. On the document table, a document is placed. The reading unit is disposed below the document table, and scans the placed document in a main-scanning direction to read an image. The reading unit moving part moves the reading unit in a sub-scanning direction crossing the main-scanning direction and in an opposite direction to the reading direction. To the cursor, a reading start side edge of the document placed on the document table in the sub-scanning direction is abutted. The cursor moving part moves the cursor along the sub-scanning direction in a reciprocating manner. The cursor moving part moves the cursor from a reference position of the reading unit in the opposite direction in conjunction with a movement of the reading unit from the home position in the opposite direction, so that an image readable range in the sub-scanning direction can be increased.

An image forming according to the present disclosure includes the image reading device, and an image forming part which forms an image on a sheet based on image date of the document read by the image reading device.

### BRIEF DESCRIPTION OF THE DRAWINGS

FIG. 1 is a front view schematically showing an internal structure of an image forming apparatus according to one embodiment of the present disclosure.
FIG. 2 is a perspective view showing a reading part of an image reading device according to one embodiment of the present disclosure.
FIG. 3 is a front view showing a reading unit moving part of the image reading device according to the embodiment of the present disclosure.
FIG. 4 is a plan view showing a cursor of the image reading device according to the embodiment of the present disclosure.
FIG. 5A is a perspective view showing the front end portion of the cursor of the image reading device according to the embodiment of the present disclosure.
FIG. 5B is a perspective view showing the rear end portion of the cursor of the image reading device according to the embodiment of the present disclosure.
FIG. 6 is a perspective view showing a cursor moving part of the image reading device according to the embodiment of the present disclosure.
FIG. 7 is a front view schematically showing the cursor moving part of the image reading device according to the embodiment of the present disclosure.
FIG. 8 is a cross-sectional view showing the reading unit (at the home position) and the cursor (at the first reference position) in the image reading device according to the embodiment of the present disclosure.
FIG. 9 is a cross-sectional view showing the reading unit (at the conveyed document reading position) and the cursor (at the first reference position) in the image reading device according to the embodiment of the present disclosure.
FIG. 10 is a cross-sectional view showing the reading unit (the conveyed document reading position → the maximum opposite position) and the cursor (the first reference position → the second reference position) in the image reading device according to an embodiment of the present disclosure.
FIG. 11 is a cross-sectional view showing the reading unit (at the maximum opposite position) and the cursor (at the second reference position) in the image reading device according to an embodiment of the present disclosure.
FIG. 12 is a cross-sectional view showing the reading unit (at the legal reading start position) and the cursor (at the second reference position) in the image reading device according to an embodiment of the present disclosure.
FIG. 13 is a plan view showing positions of the reading unit and the cursor in the image reading device according to the embodiment of the present disclosure.

### BRIEF DESCRIPTION OF THE DISCLOSURE

Hereinafter, with reference to the drawings, an image reading device and an image forming apparatus according to one embodiment of the present disclosure will be described.

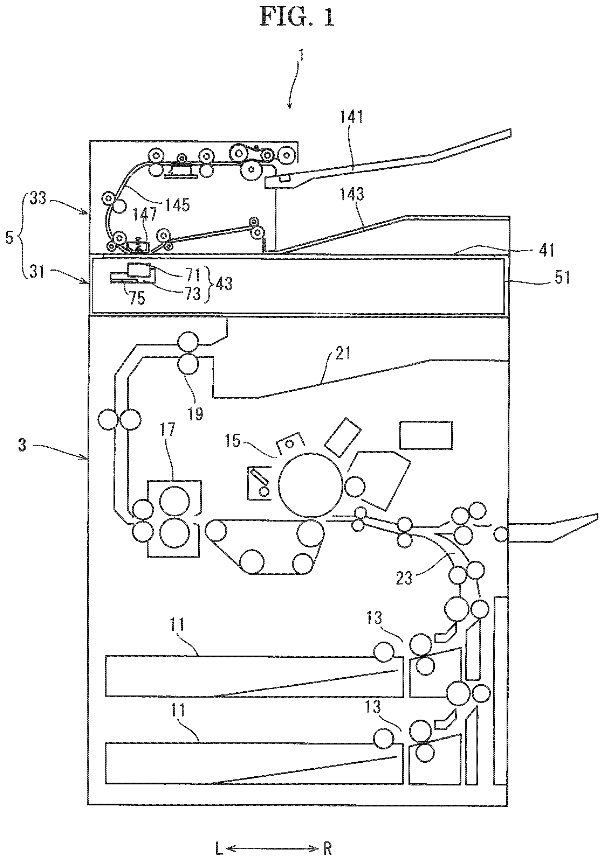

First, with reference to FIG. 1, the image forming apparatus 1 will be described. FIG. 1 is a front view schematically showing the internal structure of the image forming apparatus 1. Fr, Rr, L and R in each figure indicate the front side, rear side, left side and right side of the image forming apparatus 1, respectively.

The image forming apparatus 1 is provided with an image forming part 3 which forms an image on a sheet, and an image reading part 5 which is disposed above the image forming part 3 and reads an image (document) to be formed in the image forming part 3.

First, the image forming part 3 will be described. The image forming part 3 includes a plurality of sheet feeding cassettes 11, a plurality of sheet feeding devices 13 which feed the sheets from the sheet feeding cassettes 11, a toner image forming part 15 which forms a toner image on the sheet, a fixing part 17 which fixes the toner image to the sheet, and a discharge part 19 which discharges the sheet. In the image forming part 3, a discharge tray 21 is formed below the discharge part 19. Further, in the image forming part 3, a conveyance path 23 along which the sheet is conveyed from each sheet feeding device 13 toward the discharge part 19 through the toner image forming part 15 and the fixing part 17 is formed.

The sheet fed from one of the sheet feeding cassettes 11 by the corresponding sheet feeding device 13 is conveyed to the toner image forming part 15 along the conveyance path 23. The toner image forming part 15 forms a toner image on the sheet based on an image read by the image reading part 5. The sheet on which the toner image is formed is conveyed to the fixing part 17 along the conveyance path 23. The fixing part 17 fixes the toner image to the sheet. Thereafter, the sheet is discharged from the discharge part 19, and stacked on the discharge tray 21.

Next, the image reading part 5 will be described. The image reading part 5 includes a reading part 31 which reads the image of the document, and a conveying part 33 which is disposed above the reading part 31 and conveys the document to the reading part 31.

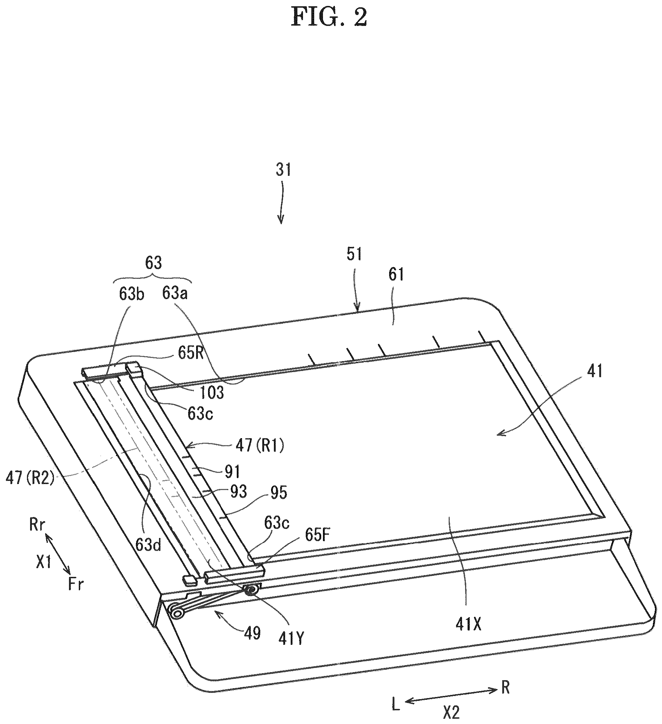

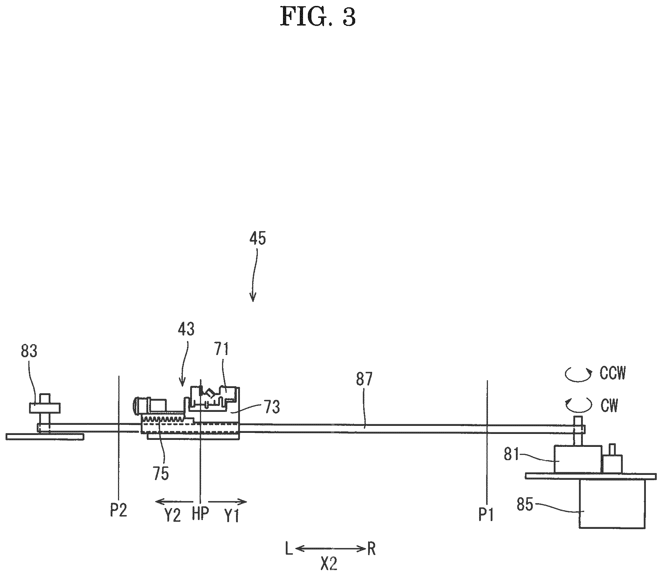

First, the reading part 31 will be described with reference to FIG. 2. FIG. 2 is a perspective view showing the reading part 31. The reading part 31 includes a document table 41 on which the document is placed, a reading unit 43 (see FIG. 1) disposed below the document table 41, a reading unit moving part 45 (not shown in FIG. 1 and FIG. 2, and will be described later with reference to FIG. 3) which moves the reading unit 43 in a reciprocating manner, a cursor 47 (see FIG. 2) which positions the document placed on the document table 41, and a cursor moving part 49 (see FIG. 2) which moves the cursor 47 in a reciprocating manner. They are supported by a housing 51.

First, the housing 51 will be described. As shown in FIG. 2, the housing 51 has a rectangular parallelepiped box-like shape having a top plate 61, a bottom plate, front and rear side plates, and left and right side plates. The top plate 61 has a substantially rectangular opening 63 elongated in the left-and-right direction. The opening 63 has a rectangular main opening 63a and a rectangular left opening 63b having a longer length in the front-and-rear direction than the main opening 63a. With this configuration, front and rear stepped surfaces 63c along the front-and-rear direction are formed between the front and rear side surfaces of the main opening 63a and the front and rear side surfaces of the left opening 63b.

As shown in FIG. 2, front and rear rails 65F and 65R are formed along the front and rear edges of the left opening 63b in the left-and-right direction. The front and rear rails 65F and 65R are L-shaped in a side view, having upright walls stood from the front and rear edges of the left opening 63b, and horizontal walls bent from the upper ends of the upright walls in directions facing each other. The horizontal wall of the front rail 65F has a bent piece (not shown) bent downward from the tip.

Next, the document table 41 will be described with reference to FIG. 2. The document table 41 has a rectangular shape, and is made of transparent glass. The document table 41 is supported by the housing 51 so as to be exposed to the opening 63 from below the top plate 61 of the housing 51. An area 41X exposed from the main opening 63a of the opening 63 serves as a document placement surface on which the document is placed in the sheet fixing system. An area 41Y exposed from the left opening 63b of the opening 63 is a reading position at which the image of the document is read in the sheet-through system.

Next, the reading unit 43 will be described with reference to FIG. 1. The reading unit 43 includes a contact image sensor (CIS) 71 and a holder 73 which holds the CIS71. The CIS71 includes a light source for irradiating light toward the image to be read, and a plurality of light receiving elements which photoelectrically converts light reflected by the document. The light receiving elements are arranged in the main-scanning direction X1. The main-scanning direction X1 is the front-and-rear direction in this embodiment. At the center portion of the holder 73 in the front-and-rear direction, a reading unit-side rack gear 75 with teeth facing downward is formed along the sub-scanning direction X2 (in this embodiment, the left-and-right direction) orthogonal to the main-scanning direction X1.

Next, the reading unit moving part 45 will be described with reference to FIG. 3. FIG. 3 is a side view schematically showing the reading unit moving part 45. The reading unit moving part 45 moves the reading unit 43 from the home position HP in the reading direction Y1 (the right direction in this embodiment) along the sub-scanning direction X2 (the left-and-right direction) and the opposite direction Y2 (the left direction in this embodiment). The home position HP is a position below the left end portion of the document placement surface (the area 41X exposed from the main opening 63a in FIG. 2) of the document table 41, and is a document reading start position by the document fixing system.

The reading unit moving part 45 includes a driving pulley 81 and a driven pulley 83 spaced apart in the sub-scanning direction X2, a motor 85 which rotates the driving pulley 81, and a timing belt 87 wound between both pulleys 81 and 83. The driving pulley 81 is disposed at one end portion (the right end portion, in this embodiment) in the sub-scanning direction X2, and rotatably supported around a rotational shaft provided along the upper-and-lower direction. The motor 85 rotates the driving pulley 81 in one direction and the other direction. The driven pulley 83 is disposed at the other end portion (the left end portion, in this embodiment) in the sub-scanning direction X2, and rotatably supported around a rotational shaft provided along the upper-and-lower direction. The timing belt 87 is wound around the rotational shafts of the driving pulley 81 and the driven pulley 83. The holder 73 of the reading unit 43 is connected to the front side track portion of the timing belt 87.

When the driving pulley 81 is driven by the motor 85 and rotates in one direction and the other direction, the timing belt 87 circulates in one direction and the other direction, and the reading unit 43 is moved along the sub-scanning direction X2 in a reciprocating manner. More specifically, when the driving pulley 81 rotates a predetermined number of revolutions in the counterclockwise direction CCW of FIG. 3, the timing belt 87 circulates in the counterclockwise direction, and the reading unit 43 moves in the reading direction Y1 from the home position HP to the predetermined moving end position P1. Thus, the image of the document placed on the document placement surface can be read in the document fixing system. On the other hand, when the driving pulley 81 rotates by a predetermined number of revolutions in the clockwise direction CW of FIG. 3, the timing belt 87 circulates in the clockwise direction, and the reading unit 43 moves in the opposite direction Y2 from the home position HP to the conveyed document reading position P2 below the reading position in the sheet-through system. Thus, the image of the document conveyed to the reading position in the sheet-through system can be read.

Thus, the reading unit 43 is movable from the home position HP in the reading direction Y1, and also movable from the home position HP in the opposite direction Y2 to the reading direction Y1.

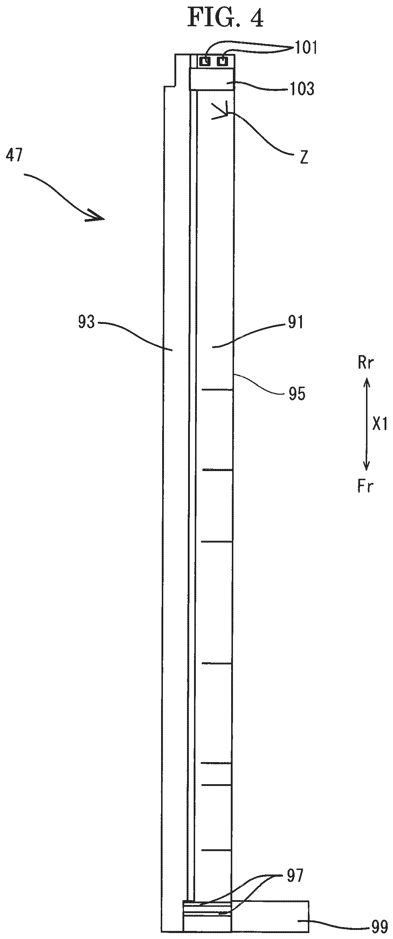

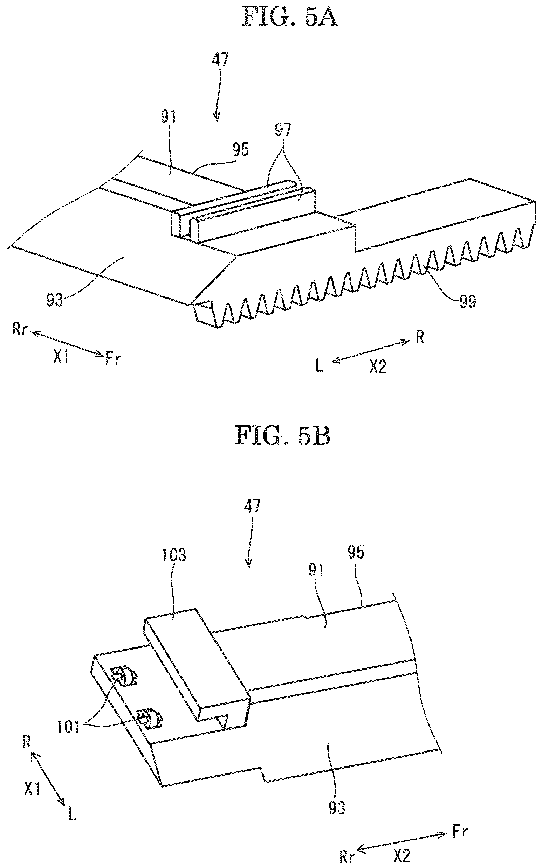

Next, the cursor 47 will be described with reference to FIG. 2 and FIG. 4, and FIG. 5A and FIG. 5B. FIG. 4 is a perspective view showing the cursor 47, and FIG. 5A and FIG. 5B are perspective views showing the end portions of the cursor 47. The cursor 47 has a plate-like body part 91 having a length equal to a length of the document table 41 along the front-and-rear direction, and a guide part 93 having a length equal to a length of the body part 91 and having a triangular shape in cross-sectional view. The upper and lower surfaces of the body part 91 are formed horizontally. One long side surface of the body part 91 is formed at right angles to the upper and lower surfaces. The long side face is an abutting surface 95 against which the reading start side edge of the document in the sub-scanning direction X2 abuts. A scale indicating a size of the document is marked on the upper surface of the body part 91. The scale indicates a length (along the main-scanning direction X1) of the document of a predetermined size from a reference position Z on one end in the longitudinal direction (see FIG. 4). A shading plate (not shown) for CIS adjustment is embedded in the lower surface of the body part 91.

The guide part 93 is fixed to the other long side surface of the body part 91 opposite to the abutting surface 95. The lower surface of the guide part 93 is continuous with the lower surface of the body part 91. The guide part 93 is higher than the body part 91, and has a guide surface inclined upward toward the body part 91. Along the guide surface, the document which has passed the reading position is guided to the downstream side in the sheet-through system.

As shown in FIG. 5A, on the upper surface of the front end portion of the body part 91, two guide walls 97 along the left-and-right direction are formed at a predetermined interval in the front-and-rear direction. Further, on the lower surface of the front end portion of the body part 91, a cursor-side rack gear 99 with teeth facing downward is formed along the left-and-right direction. The cursor-side rack gear 99 extends from the lower surface of the body part 91 in the direction opposite to the guide part 93.

As shown in FIG. 5B, on the upper surface of the rear end portion of the body part 91, two recesses are formed spaced in the left-and-right direction. A pulley 101 rotatable around a rotational shaft provided along the front-and-rear direction is accommodated in each recess so as to protrude from the upper surface. Further, on the upper surface, a locking piece 103 is formed on the inner side (center side) of the recesses. The locking piece 103 has an upright wall vertically stood from the upper surface and a horizontal wall bent rearward from the upper end of the upright wall.

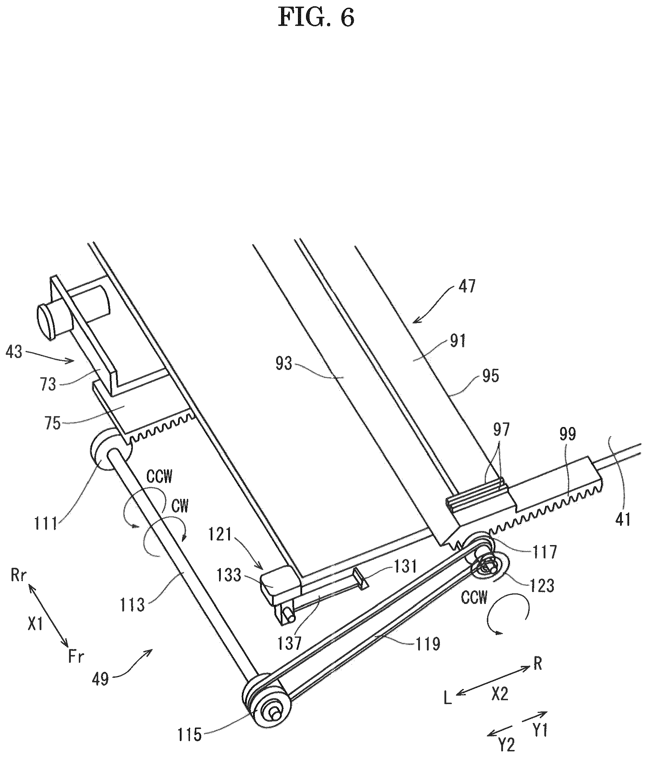

As shown in FIG. 2, the cursor 47 is placed on the upper surface of the document table 41 in a posture long the main-scanning direction X1 (the front-and-rear direction). The rear end portion of the body part 91 enters below the horizontal wall of the rear rail 65R provided on the top plate 61 of the housing 51, and the locking piece 103 (see FIG. 5B) provided on the upper surface of the body part 91 is placed on the horizontal wall of the rear rail 65R. Further, the cursor-side rack gear 99 (see FIG. 5A) provided at the front end portion of the body part 91 protrudes downward below the document table 41 on the front side of the document table 41 (see FIG. 6). Further, the bent piece of the front rail 65F provided on the top plate 61 of the housing 51 enters between the two guide walls 97 provided on the upper surface of the front end portion of the body part 91.

In this manner, the cursor 47 can move along the upper surface of the document table 41 in the sub-scanning direction X2 (the left-and-right direction). More specifically, the cursor 47 is movable in the opposite direction Y2 (leftward) from a first reference position R1 (see the solid line in FIG. 2) where the abutting surface 95 abuts the stepped surfaces 63c of the top plate 61 of the housing 51 to a second reference position R2 (see the dashed line in FIG. 2) where the left edge of the guide part 93 abuts the left side surface 63d of the left opening 63b of the top plate 61 of the housing 51. By moving the abutting surface 95 in the opposite direction Y2 in this manner, a size of the document which can be placed on the document table 41 can be extended in the sub-scanning direction X2. As an example, at the first reference position R1, the document of the A4 vertical size can be placed, and at the second reference position R2, the document of the legal size can be placed.

The first reference position R1 is a position downstream of the home position HP of the reading unit 43 in the reading direction Y1.

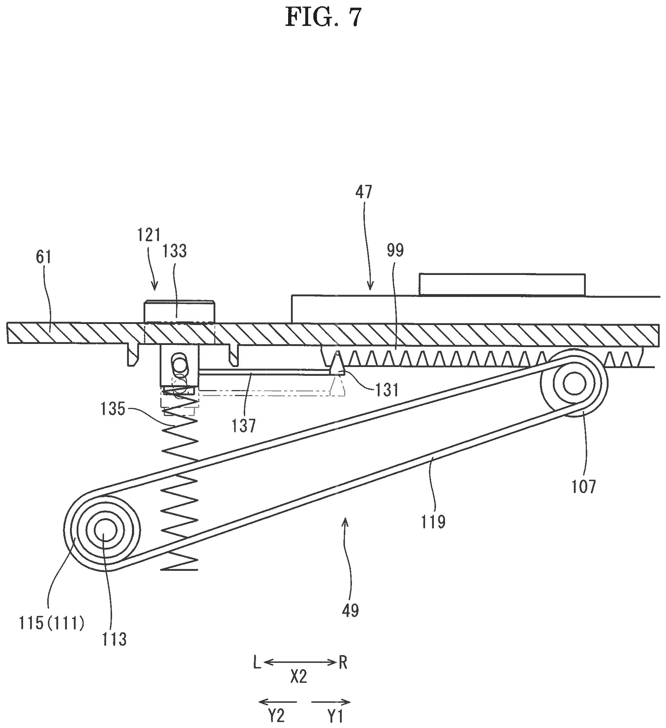

Next, the cursor moving part 49 will be described with reference to FIG. 6 and FIG. 7. FIG. 6 is a perspective view showing the cursor moving part 49, and FIG. 7 is a front view schematically showing the cursor moving part 49. The cursor moving part 49 moves the cursor 47 along the sub-scanning direction X2 (the left-and-right direction) in a reciprocating manner. In particular, the cursor moving part 49 moves the cursor 47 from the first reference position R1 to the second reference position R2 in conjunction with the movement of the reading unit 43 from the home position HP to the opposite direction Y2 (leftward).

The cursor moving part 49 includes a driving gear 111 engageable with the reading unit-side rack gear 75 of the reading unit 43, a one-way clutch 115 provided on a rotational shaft 113 of the driving gear 111, a pulley 117, a timing belt 119 connecting the pulley 117 and the one-way clutch 115, a locking mechanism 121 for the cursor 47, and a spiral spring 123 arranged between the pulley 117 and the housing 51.

First, the driving gear 111 will be described. The driving gear 111 is disposed at the left end portion of the inside of the housing 51, and is supported so as to be rotatable integrally with the rotational shaft 113 provided along the front-and-rear direction. In a state where the reading unit 43 is moved to the home position HP, the driving gear 111 is not engaged with the reading unit-side rack gear 75 of the holder 73. The reading unit 43 moves in the opposite direction Y2 from the home position HP, then passes below the reading position in the seat-through system, and then the reading unit-side rack gear 75 of the holder 73 is engaged with the driving gear 111. When the reading unit 43 further moves in the opposite direction Y2, the driving gear 111 rotates in the counterclockwise direction CCW.

Next, the one-way clutch 115 will be described. The one-way clutch 115 is fixed to the other end portion of the rotational shaft 113. Only the rotational force in the counterclockwise direction CCW of the rotational shaft 113 is transmitted to the one-way clutch 115 to rotate it in the counterclockwise direction, while the rotational force in the clockwise direction CW of the rotational shaft 113 is not transmitted.

Next, the pulley 117 will be described. The pulley 117 is arranged so as to be engaged with the cursor-side rack gear 99 provided in the cursor 47, and is supported by the housing 51 so as to be rotatable around a rotational shaft provided along the front-and-rear direction. That is, when the pulley 117 rotates, the cursor-side rack gear 99, that is, the cursor 47 moves along the left-and-right direction (the sub-scanning direction X2).

Next, the timing belt 119 will be described. The timing belt 119 is wound around the pulley 117 and the one-way clutch 115, and transmits the rotation of the one-way clutch 115 to the pulley 117.

When the driving gear 111 rotates in the counterclockwise direction CCW and the rotational shaft 113 rotates in the counterclockwise direction CCW, the rotation of the rotational shaft 113 in the counterclockwise direction CCW is transmitted to the one-way clutch 115, and the one-way clutch 115 rotates in the counterclockwise direction CCW. The rotation of the one-way clutch 115 is transmitted to the pulley 117 via the timing belt 119, and the pulley 117 rotates in the counterclockwise direction CCW. Then, the cursor 47 moves in the opposite direction Y2 (leftward) together with the cursor-side rack gear 99. On the other hand, when the driving gear 111 rotates in the clockwise direction CW and the rotational shaft 113 rotates in the clockwise direction CW, the rotation of the rotational shaft 113 in the clockwise direction CW is not transmitted to the one-way clutch 115, so that the one-way clutch 115 does not rotate. That is, the cursor 47 also does not move.

Next, the locking mechanism 121 will be described with reference to FIG. 7. When the cursor 47 moves to the second reference position R2, the locking mechanism 121 locks the cursor-side rack gear 99, that is the cursor 47. The locking mechanism 121 includes a gear tooth 131 engageable with the cursor-side rack gear 99, and a button 133 integrally provided with the gear tooth 131.

The gear tooth 131 have a substantially triangular shape in cross-sectional view, which can be engaged with the tooth groove of the cursor-side rack gear 99. The button 133 is disposed in an opening formed in the top plate 61 of the housing 51, and is biased upward by a coil spring 135. The gear tooth 131 are integrally provided with the button 133 by an arm 137.

When the cursor 47 moves to the second reference position R2, the gear tooth 131 is engaged with the most opposite side tooth groove of the cursor-side rack gear 99 in the opposite direction Y2, and the movement of the cursor-side rack gear 99 is restricted. On the other hand, when the button 133 is pushed in, the gear tooth 131 is separated downward from the cursor-side rack gear 99 (see the dash-dotted line in FIG. 7), and the cursor-side rack gear 99, that is, the cursor 47 can be moved.

Next, the spiral spring 123 will be described with reference to FIG. 6. The center end of the spiral spring 123 is fixed to the rotational shaft of the pulley 117, and the outer end is fixed to the housing 51. When the pulley 117 rotates in the counterclockwise direction CCW, the spiral spring 123 is wound and deformed so as to reduce the outer diameter. Thereafter, when the force for rotating the pulley 117 is released, the spiral spring 123 is deformed so as to increase the outer diameter. With this deformation, the spiral spring 123 is fed out, and the pulley 117 rotates in the clockwise direction.

Next, referring again to FIG. 1, the conveying part 33 will be described. The conveying part 33 has a conveyance path 145 along which the document placed on a document tray 141 is conveyed to the sheet discharge tray 143 via the reading position. A reading guide 147 is supported at the reading position so as to be movable in the upper-and-lower direction. The conveying part 33 is turnable upward and downward around a support shaft provided at the rear end of the reading part 31. When the conveying part 33 is turned upward, the document table 41 is opened, and the document can be placed on the document table 41 or taken out from the document table 41. When the conveying part 33 is turned downward, the document placed on the document table 41 is fixed by the conveying part 33.

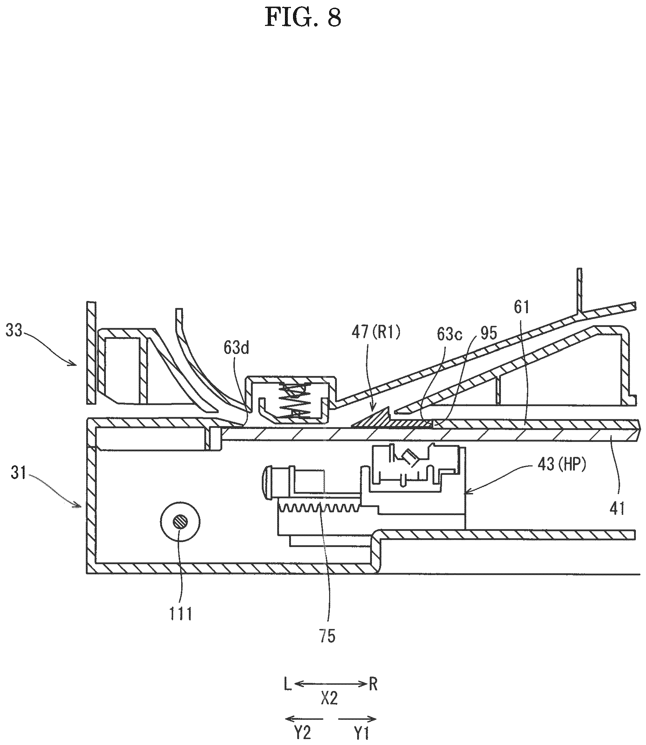

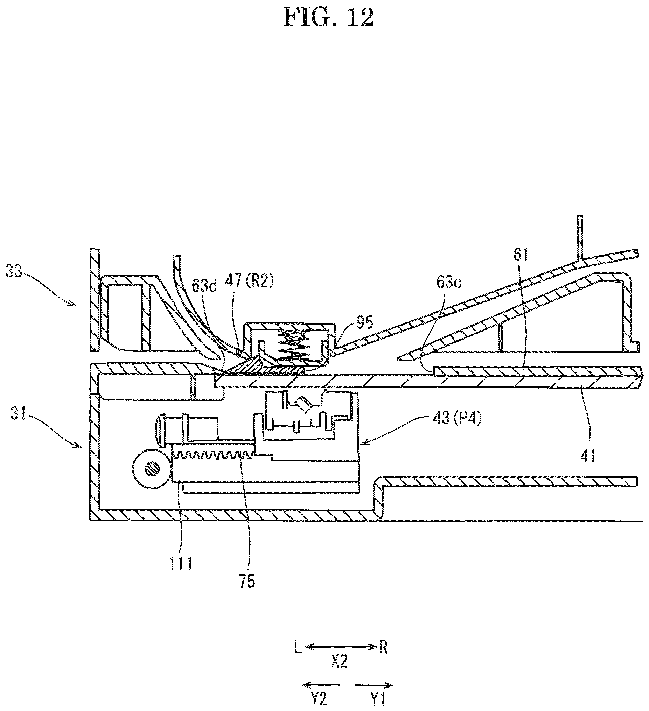

An image reading operation (in the document fixing system) in the reading part 31 having the above configuration will be described with reference to FIG. 2 and FIG. 8 to FIG. 12. FIG. 8 to FIG. 11 are front views showing the cursor 47 and the reading unit 43. FIG. 12 is a plan view showing the positions of the cursor 47 and the reading unit 43.

As shown in FIG. 8, in the standby state, the reading unit 43 is moved to the home position HP. The cursor 47 is arranged at the first reference position R1. As described above, the first reference position R1 is a position downstream of the home position HP of the reading unit 43 in the reading direction Y1. In a case of reading an image of an A4 size document, the conveying part 33 is turned upward to expose the document table 41, and the document is placed on the document placement surface. At this time, the left rear corner of the document is positioned so as to align with the corner between the side surface of the main opening 63a of the top plate 61 of the housing 51 and the abutting surface 95 of the cursor 47. Thereafter, the conveying part 33 is turned downward, and the document is fixed to the document table 41.

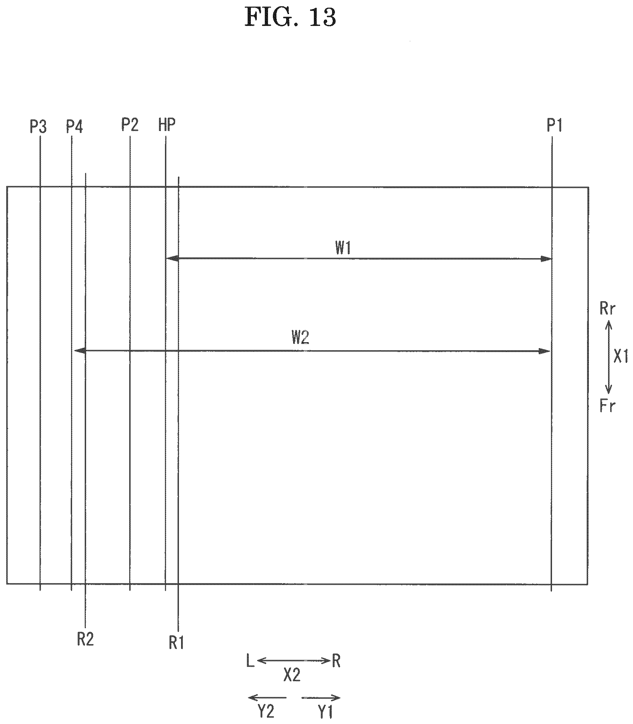

When the start of reading is instructed, the motor 85 (see FIG. 3) of the reading unit moving part 45 is driven to rotate the driving pulley 81 in the counterclockwise direction CCW. Then, the timing belt 87 travels in the counterclockwise direction, and the reading unit 43 having the holder 73 fixed to the timing belt 87 moves from the home position HP in the reading direction Y1. When the reading unit 43 moves to the moving end position P1, the image of the document is read by the CIS71. After the reading unit 43 is moved to the moving end position P1 (see FIG. 13), the motor 85 is stopped, and then the motor 85 is driven to rotate the driving pulley 81 in the clockwise direction CW, the timing belt 87 travels in the clockwise direction, and the reading unit 43 returns to the home position HP.

Next, a case of reading an image of a legal size document will be described. When an information that the document size is a legal size is input, the motor 85 (see FIG. 3) of the reading unit moving part 45 is driven to drive the driving pulley 81 in the clockwise direction CW. Then, the timing belt 87 travels in the clockwise direction, and the reading unit 43 starts to move in the opposite direction Y2.

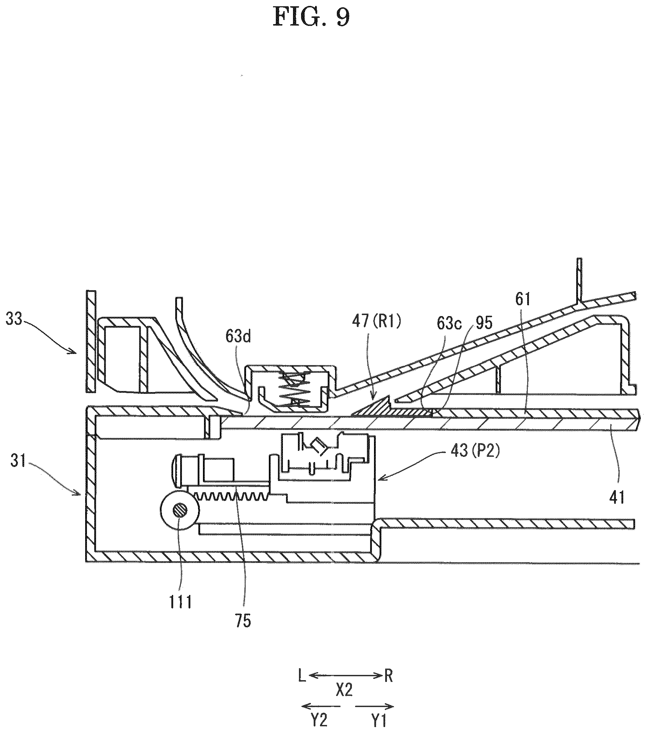

Then, as shown in FIG. 9, when the reading unit 43 moves in the opposite direction Y2 to the conveyed document reading position P2, the reading unit-side rack gear 75 is engaged with the driving gear 111 of the cursor moving part 49. Then, as shown in FIG. 6, the driving gear 111 rotates in the counterclockwise direction CCW, and the rotational shaft 113 rotates in the counterclockwise direction CCW together with the driving gear 111. The rotation of the rotational shaft 113 in the counterclockwise direction CCW is transmitted to the one-way clutch 115, and the one-way clutch 115 rotates in the counterclockwise direction CCW. The rotation of the one-way clutch 115 is transmitted to the pulley 117 via the timing belt 119, and the pulley 117 rotates in the counterclockwise direction CCW. Thus, the cursor 47 starts to move in the opposite direction Y2 from the first reference position R1 together with the cursor-side rack gear 99 engaged with the pulley 117. The rotation of the pulley 117 causes the spiral spring 123 to be wound and deformed so as to reduce the outer diameter.

At this time, the front and rear end portions of the cursor 47 are guided by the front and rear rails 65F and 65R provided in the housing 51. In the front end portion of the cursor 47, the bent piece of the front rail 65F enters between the two guide walls 97 (see FIG. 5A) provided on the upper surface of the body part 91. Thus, the cursor 47 can be surely guided in the right-and-left direction (the sub-scanning direction X2). Further, in the rear end portion of the cursor 47, the horizontal wall of the locking piece 103 (see FIG. 5B) provided in the body part 91 is placed on the horizontal wall of the rear rail 65R, and the two pulleys 101 abut against the lower surface of the horizontal wall, so that friction between the cursor 47 and the rail 65R can be reduced. In this manner, the cursor 47 stably moves along the left-and-right direction (the sub-scanning direction X2).

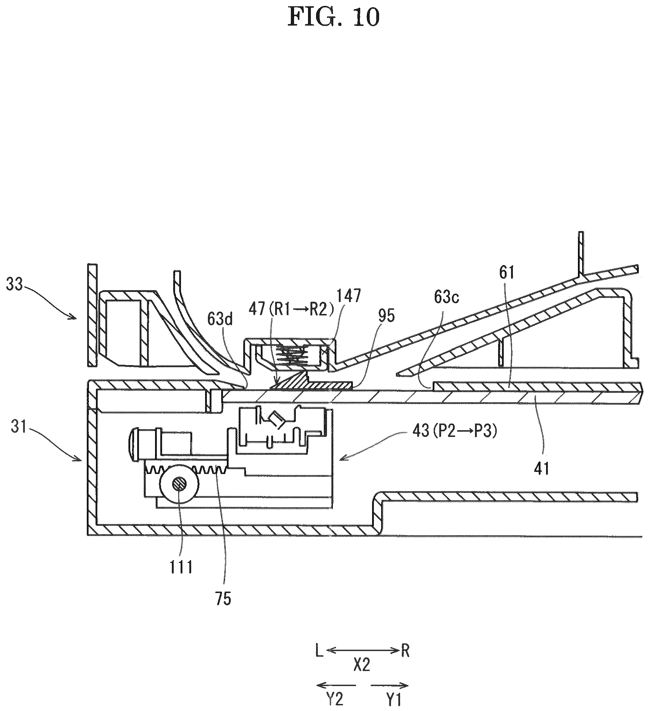

The reading unit 43 moves further in the opposite direction Y2 beyond below the reading position. With the movement of the reading unit 43, the cursor 47 moves further in the opposite direction Y2 together with the cursor-side rack gear 99. As shown in FIG. 10, when the cursor 47 passes through the reading position, the reading guide 147 of the conveying part 33 is pushed upward by the guide part 93 of the cursor 47.

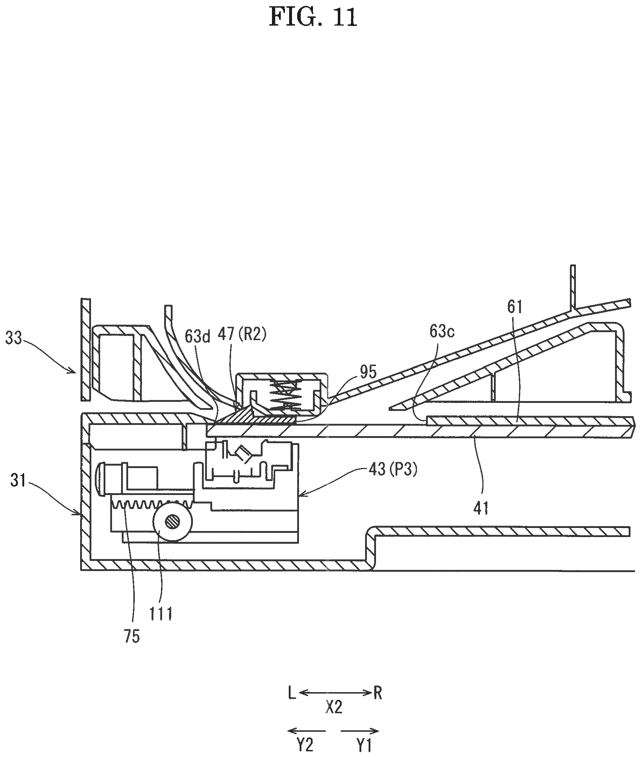

As shown in FIG. 11, when the reading unit 43 moves to the maximum opposite position P3, the motor 85 of the reading unit moving part 45 stops. With the movement of the reading unit 43, the cursor 47 moves to the second reference position R2. At the second reference position R2, the cursor 47 is locked by the locking mechanism 121 as described above. That is, the gear tooth 131 of the locking mechanism 121 is engaged with the tooth groove of the cursor-side rack gear 99.

Thereafter, the motor 85 of the reading unit moving part 45 is driven to rotate the driving pulley 81 in the counterclockwise direction CCW, and the timing belt 87 travels in the counterclockwise direction, so that the reading unit 43 moves from the maximum opposite position P3 to the reading direction Y1. As shown in FIG. 12, the reading unit 43 moves until the reading unit-side rack gear 75 is separated from the driving gear 111 of the cursor moving part 49. A position of the reading unit 43 at this time is the legal reading start position P4 (see FIG. 12). The legal reading start position P4 is a position between the maximum opposite position P3 and the conveyed document reading position P2, and is a position upstream of the second reference position R2 of the cursor 47 in the reading direction Y1.

When the reading unit 43 is moved in the reading direction Y1, as shown in FIG. 6, the driving gear 111 engaged with the reading unit-side rack gear 75 rotates in the clockwise direction CW, and the rotational shaft 113 rotates in the clockwise direction CW. At this time, since the rotation of the rotational shaft 113 in the clockwise direction CW is not transmitted to the one-way clutch 115, the one-way clutch 115 does not rotate. That is, the rotational force of the rotational shaft 113 is not transmitted to the pulley 117.

Thereafter, the conveying part 33 is opened to expose the document table 41, and the document is placed on the document placement surface. At this time, the left rear corner of the document is positioned so as to align with the corner between the side surface of the main opening 63a of the top plate 61 of the housing 51 and the abutting surface 95 of the cursor 47. Thereafter, the conveying part 33 is turned downward.

When the start of reading is instructed, the motor 85 of the reading unit moving part 45 is driven, and the driving pulley 81 rotates in the counterclockwise direction CCW (see FIG. 3). As a result, the timing belt 87 travels in the counterclockwise direction CCW, and the reading unit 43 moves from the legal reading start position P4 in the reading direction Y1. When the reading unit 43 moves to the moving end position P1, the image of the document is read by the reading unit 43. After the reading unit 43 moves to the moving end position P1, the motor 85 stops, and then the motor 85 is driven to rotate the driving pulley 81 in the clockwise direction CW, the timing belt 87 travels in the clockwise direction CW, and the reading unit 43 returns to the home position HP.

After the reading of the legal size document is completed in this manner, the button 133 of the locking mechanism 121 is pushed downward as shown in FIG. 7. Then, the gear tooth 131 is separated downward from the cursor-side rack gear 99. Thereby, the cursor-side rack gear 99, that is, the cursor 47 is unlocked, and the pulley 107 is free to rotate. Then, the wound spiral spring 123 is fed out and deformed so as to increase the outer diameter, and the pulley 117 rotates in the clockwise direction. As a result, the cursor 47 moves in the reading direction Y1 together with the cursor-side rack gear 99. The cursor 47 is returned to the first reference position R1 where the abutting surface 95 abuts against the stepped surface 63c of the opening 63 of the top plate 61 of the housing 51. As described above, the spiral spring 123 is an example of the biasing member which biases the pulley 117 in the opposite direction to the rotational direction of the one-way clutch 115 in the present disclosure.

As described above, according to the present disclosure, the cursor moving part 49 moves the cursor 47 in the opposite direction Y2 in conjunction with the movement of the reading unit 43 in the opposite direction Y2 to the reading direction Y1. Therefore, the image reading range of the document positioned by the cursor 47 can be lengthened in the sub-scanning direction X2. For example, when the cursor 47 is provided in accordance with the A4 vertical size document, the cursor 47 can be moved to a position where the legal size document can be read.

Specifically, as shown in FIG. 13, in the case of the A4 vertical size, the reading start position of the document is the first reference position R1, and the reading unit 43 moves from the home position HP to the moving end position P1 to read the image of the document (a moving distance W1). In the case of the legal size, the reading start position of the document is the second reference position R2, and the reading unit 43 moves from the legal reading start position P4 to the moving end position P1 to read the image of the document (a moving distance W2>W1).

Further, the cursor moving part 49 moves the cursor 47 in the opposite direction Y2 only in association with the movement of the reading unit 43 in the opposite direction Y2, and is not in association with the movement of the reading unit 43 in the reading direction Y1. Therefore, during the image reading, the reading unit 43 can be stably moved in the reading direction Y1 while the cursor 47 is maintained at a predetermined reference position. On the other hand, the cursor 47 can be moved in the reading direction Y1 by using the spiral spring 123 of the cursor moving part 49 and automatically returned to the first reference position R1 by a simple operation of pushing the button 133.

The document positioned at the second reference position R2 may be a document other than a legal size document.

While the present disclosure has been described for specific embodiments, the present disclosure is not limited to those embodiments. A person skilled in the art may modify the above embodiments without departing from the scope of the present disclosure.

## Claims

1. An image reading device (31) comprising:
a document table (41) on which a document is placed;
a reading unit (43) which is disposed below the document table (41) and scans the placed document in a main-scanning direction to read an image;
a reading unit moving part (45) which moves the reading unit (43) in a sub-scanning direction crossing the main-scanning direction and in an opposite direction to the reading direction;
a cursor (47) to which a reading start side edge of the document placed on the document table (41) in the sub-scanning direction is abutted; and
**characterized by**
a cursor moving part (49) which moves the cursor (47) along the sub-scanning direction in a reciprocating manner, wherein
the cursor moving part (49) moves the cursor (47) (43) from a reference position of the reading unit in the opposite direction in conjunction with a movement of the reading unit (43) from the home position in the opposite direction, so that an image readable range in the sub-scanning direction can be increased.

2. The image reading device (31) according to claim 1, wherein
the reading unit (43) includes:
an image reading sensor (71);
a holder (73) which holds the image reading sensor (71); and
a reading unit side rack gear (75) which is provided in the holder (71) in the sub-scanning direction,
the cursor moving part (49) includes:
a driving gear (111) which is engageable with the reading unit side rack gear (75);
a one-way clutch (115) which is provided coaxially with the driving gear (111);
a cursor side rack gear (99) which is provided in the cursor (47) along the sub-scanning direction;
a pulley (117) which is engageable with the cursor side rack gear (99); and
a timing belt (119) which connects the pulley (117) to the one-way clutch (115),
when the reading unit (43) passes through a predetermined position away from the home position in the opposite direction, the reading unit side rack gear (75) is engaged with the driving gear (111) to rotate the driving gear (111), a rotation of the driving gear (111) is transmitted from the one-way clutch (115) to the pulley (117) via the timing belt (119), and the pulley (117) rotates to move the cursor (47) in the opposite direction together with the cursor side rack gear (99).

3. The image reading device (31) according to claim 2, wherein
the cursor moving part (49) includes:
a locking mechanism (121) which locks the cursor side rack gear (99) when the cursor (47) moves to a position away from the reference position in the opposite direction; and
a biasing member (123) which biases the pulley (117) in a direction opposite to the rotational direction of the one-way clutch (115),
when the locking mechanism (121) unlocks the cursor side rack gear (99), the pulley (117) is rotated by the biasing member (123), and the cursor (47) returns to the reference position together with the cursor side rack gear (99).

4. The image reading device (31) according to claim 2,
the reading unit moving part (45) moves the reading unit (43) in the opposite direction, then moves the reading unit (43) in the reading direction until the reading unit side rack gear (75) is separated from the driving gear 8111), and then image reading by the reading unit (43) is started.

5. An image forming apparatus (1) comprising:
the image reading device (31) according to claim 1, and
an image forming part (3) which forms an image on a sheet based on image date of the document read by the image reading device (31).

## Patentansprüche

1. Bildlesegerät (31) umfassend:
einen Dokumententisch (41), auf dem ein Dokument aufgelegt ist;
eine Leseeinheit (43), die unterhalb des Dokumententisches (41) angeordnet ist und das aufgelegte Dokument in einer Hauptabtastrichtung abtastet, um ein Bild zu lesen;
ein Leseeinheit-Bewegungsteil (45), das die Leseeinheit (43) in einer die Hauptabtastrichtung kreuzenden Nebenabtastrichtung und in einer zu der Leserichtung entgegengesetzten Richtung bewegt;
einen Cursor (47), an den eine Lesestart-Seitenkante des auf dem Dokumententisch (41) in der Nebenabtastrichtung aufgelegten Dokuments angrenzt; und
**gekennzeichnet durch**
ein Cursor-Bewegungsteil (49), das den Cursor (47) entlang der Nebenabtastrichtung in einer hin- und hergehenden Weise bewegt, wobei
das Cursor-Bewegungsteil (49) den Cursor (47) von einer Referenzposition der Leseeinheit in die entgegengesetzte Richtung in Verbindung mit einer Bewegung der Leseeinheit (43) von der Ausgangsposition in die entgegengesetzte Richtung bewegt, so dass ein Bildlesebereich in der Nebenabtastrichtung vergrößert werden kann.

2. Bildlesegerät (31) nach Anspruch 1, wobei
die Leseeinheit (43) umfasst:
einen Bildlesesensor (71);
einen Halter (73), der den Bildlesesensor (71) hält; und
eine an der Leseeinheit angeordnete Zahnstange (75), die in dem Halter (71) in der Nebenabtastrichtung vorgesehen ist,
wobei das Cursor-Bewegungsteil (49) umfasst:
ein Antriebszahnrad (111), das mit der an der Leseeinheit angeordneten Zahnstange (75) in Eingriff gebracht werden kann;
eine Einwegkupplung (115), die koaxial zu dem Antriebszahnrad (111) vorgesehen ist;
eine an dem Cursor angeordnete Zahnstange (99), die in dem Cursor (47) entlang der Nebenabtastrichtung vorgesehen ist;
eine Riemenscheibe (117), die mit der an dem Cursor angeordneten Zahnstange (99) in Eingriff gebracht werden kann; und
einen Zahnriemen (119), der die Riemenscheibe (117) mit der Einwegkupplung (115) verbindet,
wenn die Leseeinheit (43) eine von der Ausgangsposition entfernte vorbestimmte Position in der entgegengesetzten Richtung passiert, wird die an der Leseeinheit angeordnete Zahnstange (75) mit dem Antriebszahnrad (111) in Eingriff gebracht, um das Antriebszahnrad (111) zu drehen, eine Drehung des Antriebszahnrads (111) wird von der Einwegkupplung (115) über den Zahnriemen (119) auf die Riemenscheibe (117) übertragen, und die Riemenscheibe (117) dreht sich, um den Cursor (47) zusammen mit der an dem Cursor angeordneten Zahnstange (99) in die entgegengesetzte Richtung zu bewegen.

3. Bildlesegerät (31) nach Anspruch 2, wobei
das Cursor-Bewegungsteil (49) umfasst:
einen Verriegelungsmechanismus (121), der die an dem Cursor angeordnete Zahnstange (99) verriegelt, wenn sich der Cursor (47) in der entgegengesetzten Richtung von der Referenzposition weg zu einer Position bewegt; und
ein Vorspannelement (123), das die Riemenscheibe (117) in einer Richtung entgegengesetzt zu der Drehrichtung der Einwegkupplung (115) vorspannt,
wobei, wenn der Verriegelungsmechanismus (121) die an dem Cursor angeordnete Zahnstange (99) entriegelt, die Riemenscheibe (117) durch das Vorspannelement (123) gedreht wird und der Cursor (47) zusammen mit der an dem Cursor angeordneten Zahnstange (99) in die Referenzposition zurückkehrt.

4. Bildlesegerät (31) nach Anspruch 2,
wobei das Leseeinheit-Bewegungsteil (45) die Leseeinheit (43) in der entgegengesetzten Richtung bewegt, dann die Leseeinheit (43) in der Leserichtung bewegt, bis die an der Leseeinheit angeordnete Zahnstange (75) von dem Antriebszahnrad (111) getrennt ist, und dann die Bildlesung durch die Leseeinheit (43) gestartet wird.

5. Bildgebungsvorrichtung (1), umfassend:
das Bildlesegerät (31) gemäß Anspruch 1, und
ein Bildgebungsteil (3), das auf der Grundlage der Bilddaten des von dem Bildlesegerät (31) gelesenen Dokuments ein Bild auf einem Blatt bildet.

## Revendications

1. Un dispositif (31) de lecture d'images, comprenant :
une table à documents (41), sur laquelle est placé un document ;
une unité de lecture (43), qui est agencée sous la table à documents (41) et qui scanne le document placé dans une direction de scannage principale afin de lire une image ;
une partie mobile (45) de l'unité de lecture, qui déplace l'unité de lecture (43) dans une direction de scannage secondaire croisant la direction de scannage principale et dans une direction opposée à la direction de lecture ;
un curseur (47), contre lequel vient buter un bord latéral de début de lecture du document placé sur la table à documents (41) dans la direction de scannage secondaire ; et
**caractérisé par**
une partie (49) de déplacement du curseur, qui déplace le curseur (47) le long de la direction de scannage secondaire de manière alternée, dans lequel
la partie (49) de déplacement du curseur déplace le curseur (47) à partir d'une position de référence de l'unité de lecture dans la direction opposée en conjonction avec un mouvement de l'unité de lecture (43) à partir de la position d'origine dans la direction opposée, de sorte qu'une plage lisible d'image dans la direction de scannage secondaire est apte à être augmentée.

2. Le dispositif (31) de lecture d'images selon la revendication 1, dans lequel
l'unité de lecture (43) comprend :
un capteur (71) de lecture d'image ;
un support (73), qui maintient le capteur (71) de lecture d'image ; et
une crémaillère (75) côté unité de lecture, qui est prévue dans le support (73) dans la direction de scannage secondaire,
la partie (49) de déplacement du curseur comprend :
un pignon d'entraînement (111), qui est apte à venir en engagement avec la crémaillère (75) côté unité de lecture ;
un embrayage unidirectionnel (115), qui est prévu coaxialement avec le pignon d'entraînement (111) ;
une crémaillère (99) côté curseur, qui est prévue dans le curseur (47) le long de la direction de scannage secondaire ;
une poulie (117) qui est apte à venir en engagement avec la crémaillère (99) côté curseur ; et
une courroie de synchronisation (119) qui relie la poulie (117) à l'embrayage unidirectionnel (115),
lorsque l'unité de lecture (43) passe par une position prédéterminée éloignée de la position d'origine dans la direction opposée, la crémaillère (75) côté unité de lecture est en engagement avec le pignon d'entraînement (111) de façon à faire tourner le pignon d'entraînement (111), la rotation du pignon d'entraînement (111) est transmise de l'embrayage unidirectionnel (115) à la poulie (117) via la courroie de synchronisation (119), et la poulie (117) tourne de façon à déplacer le curseur (47) dans la direction opposée, avec la crémaillère (99) côté curseur.

3. Le dispositif (31) de lecture d'images selon la revendication 2, dans lequel
la partie (49) de déplacement du curseur comprend :
un mécanisme de verrouillage (121), qui verrouille la crémaillère (99) côté curseur lorsque le curseur (47) se déplace vers une position éloignée de la position de référence dans la direction opposée ; et
un élément de sollicitation (123) qui sollicite la poulie (117) dans une direction opposée à la direction de rotation de l'embrayage unidirectionnel (115),
lorsque le mécanisme de verrouillage (121) déverrouille la crémaillère (99) côté curseur, la poulie (117) est tournée par l'élément de sollicitation (123), et le curseur (47) revient à la position de référence avec la crémaillère (99) côté curseur.

4. Le dispositif (31) de lecture d'images selon la revendication 2,
dans lequel la partie mobile (45) de l'unité de lecture déplace l'unité de lecture (43) dans la direction opposée, puis déplace l'unité de lecture (43) dans la direction de lecture jusqu'à ce que la crémaillère (75) côté unité de lecture soit séparée du pignon d'entraînement (111), puis la lecture d'images par l'unité de lecture (43) est lancée.

5. Un appareil (1) de formation d'images, comprenant :
le dispositif (31) de lecture d'images selon la revendication 1, et
une partie (3) de formation d'image, qui forme une image sur une feuille à partir des données d'image du document lu par le dispositif (31) de lecture d'images.
